# EUROPEAN PATENT SPECIFICATION

(11) **EP 3 710 761 B1**
(45) Date of publication and mention of the grant of the patent: **03.04.2024**
(21) Application number: 18879425.9
(22) Date of filing: 15.11.2018
(51) Int. Cl.: F24S 40/10, F24S 10/70, F24S 20/20, F28D 1/047

(54) **A CONCENTRATED SOLAR POWER RECEIVER**
EMPFÄNGER VON KONZENTRIERTER SONNENENERGIE
RÉCEPTEUR D'ÉNERGIE SOLAIRE CONCENTRÉE

(30) Priority: 15.11.2017 AU 2017904632; 22.06.2018 AU 2018902236
(43) Date of publication of application: 23.09.2020
(73) Proprietor: Vast Solar Pty Ltd, Sydney, New South Wales 2000 (AU)
(72) Inventor: FISHER, James Robert, Sydney, New South Wales 2000 (AU); CURTIS, Allan, Sydney, New South Wales 2000 (AU); DREWES, Kurt Friedrich, Sydney, New South Wales 2000 (AU); LESLIE, Bruce Alexander, Sydney, New South Wales 2000 (AU); JOST, Timothy Peter, Sydney, New South Wales 2000 (AU); BARTOS, Nicholas Paul, Sydney, New South Wales 2000 (AU)
(74) Representative: Murgitroyd & Company
(86) International application number: PCT/AU2018/051220
(87) International publication number: WO 2019/095010

(56) References cited:
- EP-A1- 2 955 461
- EP-A2- 2 737 261
- WO-A1-2013/181712
- FR-A1- 2 366 526
- US-A- 4 349 011
- US-A- 4 365 615
- US-A- 4 653 470
- US-A- 5 482 233
- US-A1- 2015 027 437
- US-A1- 2015 122 244
- US-B2- 7 011 086
- US-B2- 7 011 086
- US-B2- 9 347 686
- US-B2- 9 638 440

## Description

### Field

The present disclosure relates to a concentrated solar power (CSP) receiver, as well as to a CSP tower assembly incorporating such a receiver.

### Background of the invention

In one type of CSP system, a concentrating array of heliostats reflects sunlight towards one or more solar power receiver modules mounted on a central solar tower. Typically, the heliostats are in the form of solar tracking mirrors reflecting and focussing sunlight or solar thermal energy towards a central receiver module mounted on a solar tower.

The receiver module may include an array of pipes or conduits which carry a circulating heat transfer fluid, such as sodium or molten salt. This conveys heat to a heat storage facility such as a salt reservoir, which in turn may be used to heat water to drive one or more steam turbines. The peak heat flux to which the receivers are subjected is typically the range of up to 1500KW/m², which results in metal temperatures in excess of 600º or 700ºC. The extreme thermal stress and thermal variation to which the receiver is subjected makes demands on the types of material used and impacts the life of the receiver, and it is not uncommon for receivers to fail prematurely under such thermal stress.

Under these extreme operating conditions, it is desirable that so called "hot spots" be avoided, and that there is a relatively even heat distribution across the receiver by the conduits efficiently receiving and conducting away the heat.

Reference to any prior art in the specification is not, and should not be taken as, an acknowledgment or any form of suggestion that this prior art forms part of the common general knowledge in any jurisdiction or that this prior art could reasonably be expected to be understood, regarded as relevant and/or combined with other pieces of prior art by a person skilled in the art.

US 7 011 086 B2 discloses a concentrated solar thermal receiver according to the preamble of claim 1.

### Summary of the invention

According to the invention there is provided a concentrated solar thermal receiver for receiving concentrated solar thermal energy from a concentrating array of solar reflectors, the receiver comprising a single layered array of tubes configured to carry a heat transfer fluid and defining in combination an exposed concentrated solar thermal energy receiving surface, the array of tubes having a fluid inlet communicating with at least one inlet conduit, and a fluid outlet communicating with at least one outlet conduit, the fluid inlet comprising an operatively lower inlet header and the fluid outlet comprising an operatively upper outlet header, and the array of tubes extending between the inlet header and the outlet header, wherein the array of tubes are arranged in a serpentine configuration, and the array has predominantly transverse passes or components, with each tube in the array having an upright or longitudinal component between successive transverse passes or components, such that, in operation, the transverse components or passes are substantially horizontal and the array of tubes thereby defines a fluid flow path which is horizontal and upward.

According to an embodiment of the invention there is provided a concentrated solar thermal receiver according to the invention and in which the array includes a mounting arrangement for mounting the tubular array to a support or enclosure which is in turn mounted to a solar tower, the mounting arrangement being configured to allow transverse and upward/downward movement of the tubes in the array due to thermal contraction and expansion, the mounting arrangement including separation means for preventing adjacent tubes from touching but maintaining them in an almost touching position.

According to another embodiment of the invention there is provided a concentrated solar thermal receiver according to the invention, receiver including a thermally insulating cover movable between an open position in which the solar thermal energy receiving surface is exposed to receive solar flux and a closed position in which the solar thermal energy receiving surface is covered to block or reduce the incidence of solar flux on the tubes or to reduce heat loss from the array of tubes under conditions where the incidence of solar flux is substantially reduced or non-existent.

The fluid inlet comprises an operatively lower inlet header and the fluid outlet comprises an operatively upper outlet header, the array of tubes in combination defining the concentrated thermal energy receiving surface and extending between an inlet header and an outlet header.

The array of tubes defines a fluid flow path which is predominantly transverse and upward, or monotonic.

The transverse component is substantially horizontal, and the upright or longitudinal component may be vertical in at least one plane.The array may include a mounting arrangement for mounting the tubular array to a support or enclosure which is in turn mounted to a solar tower, the mounting arrangement being configured to allow transverse and upward/downward movement of the tubes in the array due to thermal contraction and expansion, the mounting arrangement including separation means for preventing adjacent tubes from touching but maintaining them in an almost touching position.

The mounting arrangement may comprise at least two elongate support beams which are longitudinally or vertically aligned relative to the array of tubes and which carry movable linkages mounting the transverse tube components to the supports to permit transverse and upward/downward movement thereof.

The support beams may be in the form of conduits to which the linkages are rotatably and slidably mounted, the linkages in turn being rotatably mounted to tabs on the transversely extending tube components, the linkages being separated by slidable spacers.

The lengths of each of the tubes in the array may be substantially similar, and the flow resistance of each tube may be substantially similar so as to provide a similar dwell time of heat conductive fluid.

The receiver may include a thermally insulating cover movable between an open position in which the solar thermal energy receiving surface is exposed to receive solar flux and a closed position in which the solar thermal energy receiving surface is covered to block or reduce the incidence of solar flux on the tubes.

The array of tubes may comprise a plurality of multi-pass tubes which extend alongside one another in a parallel and serpentine array from an inlet manifold of the inlet header to an outlet manifold of the outlet header.

The number of parallel tubes and the number of passes per tube are typically in inverse relationship with one another so that the overall number of transverse tube passes, whether from the same or different tubes, remains substantially the same.

The array of tubes may be substantially co-planar so as to provide a co-planar energy receiving surface. While the tubes in the co-planar array are arranged such that adjacent tubes are almost touching, while allowing for play between tubes, certain tubes may be bent out of plane when an in-plane bend radius would be too small to allow bending without excessive deformation or thinning of the tube.

The overall configuration of the array may be a billboard configuration which is square or rectangular.

The array of tubes may define a curved or multi-faceted surface.

The array of tubes may define a cylindrical or hemi-cylindrical surface, in which case the solar tower is respectively fully or partly surrounded by heliostats.

The array of tubes may define an inverted frusto-cone, or part thereof, at an optimum angle from the vertical for receiving an optimum solar flux concentration.

At least one of the inlet or outlet headers may have a floating mount which allows it to move in concert with the thermal expansion and contraction of the array of tubes.

The lower inlet header may be provided with a floating mount and the upper outlet header may be provided with a fixed mount for mounting it to a frame or enclosure, with the support beams being movably anchored to the support frame or enclosure.

The cover may include one side suited to resisting high incident radiation and a mounting arrangement for maintaining the one side facing the source or high incident radiation in the both the open and closed positions and in moving therebetween.

Conveniently, when the cover is in the open position it is located immediately below the receiver to provide protection from high incident radiation to that part of the receiver supporting structure immediately below the receiver and behind the cover.

The mounting means may include a four bar linkage-type mount for movably mounting the cover to the supporting structure or tower.

The insulating door may be configured to reduce convective and radiative heat loss from the array of tubes, in a system where the heat transfer fluid is not drained from the tubes when there is no solar flux on the tubes.

The heat conductive fluid may be sodium and the tubes may be constructed from a stainless steel alloy such as 230 or 625 or a nickel based alloy such as Inconel.

The disclosure extends to a concentrated solar thermal tower assembly including a solar thermal tower, and a concentrated solar thermal receiver of the type described mounted to an upper portion of the tower.

The tower may be pivotable between an upright position and a prone position for enabling maintenance thereof.

The disclosure includes a concentrated solar power solar tower including at least one solar thermal receiver of the type defined above.

The disclosure may also include a concentrated solar thermal installation including at least one concentrated solar thermal tower assembly of the type defined, an array of heliostats arranged around the receiver and adjustable to focus solar radiation on the receiver, and a control means for controlling operation of the receiver to prevent overheating thereof, the control means being operable to open and close the cover.

Further aspects of the present disclosure and further embodiments of the aspects described in the preceding paragraphs will become apparent from the following description, given by way of example and with reference to the accompanying drawings.

### Brief description of the drawings

Further aspects of the present disclosure and further embodiments of the aspects described in the preceding paragraphs will become apparent from the following description, given by way of example only with reference to the accompanying drawings.
Figure 1 shows a schematic view of a CSP system including a solar thermal receiver according to the present disclosure;
Figure 1A shows a perspective view of solar thermal receiver mounted on a tower;
Figure 1B shows a front view of the solar thermal receiver and tower of Figure 1A;
Figure 1C shows a top plan view of the solar thermal receiver and tower of Figures 1A and 1B;
Figure 1D shows a side view of the solar thermal receiver and tower;
Figure 1E shows a cross sectional side view along the lines 1E-1E of Figure 1B;
Figure 1F shows a detail of the upper outlet header connection;
Figure 1G shows a detail of the lower outlet header connection; Figure 2A shows a detailed perspective view of the solar thermal receiver of Figure 1A;
Figure 2B shows a rear view of the solar thermal receiver;
Figure 2C shows a top plan view of the solar thermal receiver;
Figure 2D shows a side view of the solar thermal receiver;
Figure 3A shows a detailed side view of a support beam of the solar thermal receiver,
Figure 3B shows a detailed end-on view of the support beam of Figure 3A;
Figure 4A shows a perspective view of a second embodiment of a solar thermal receiver mounted on a top part of a tower in an open position;
Figure 4B shows a perspective view of the solar thermal receiver and tower of Figure 4A in the closed position;
Figure 5A shows a cross sectional side view of a solar thermal receiver cover or door;
Figure 5B shows a cross sectional front view of the solar receiver door of Figure 5A;
Figure 6 shows a perspective view of a rotary actuator for opening and closing the door via a pulley arrangement;
Figure 7 shows a typical solar thermal tower assembly with a solar thermal receiver mounted on the upper side and a rotary actuator attached to the base of the tower;
Figure 7A shows a detail of a base of the tower of Figure 7;
Figure 8A shows a perspective partly schematic view of a further embodiment of a solar thermal receiver with an alternative door assembly in the open position;
Figure 8B shows a partly schematic side view of the solar thermal receiver of Figure 8A with the door assembly in an intermediate position, and
Figure 8C shows a partly schematic side view of the solar thermal receiver of Figure 8A with the door assembly in a closed position.

### Detailed description of the embodiments

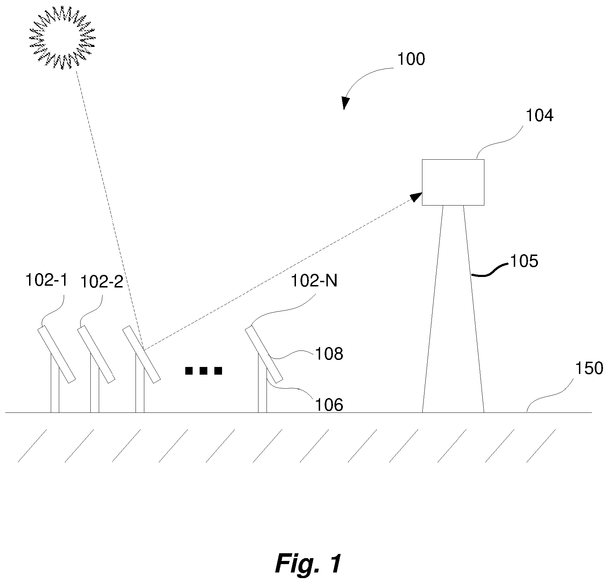

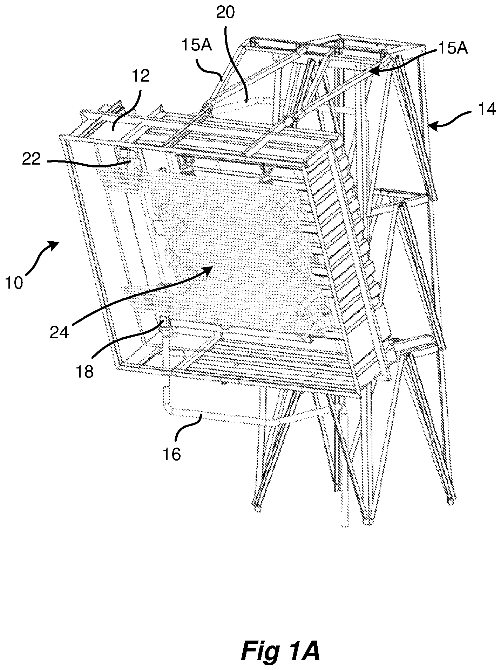

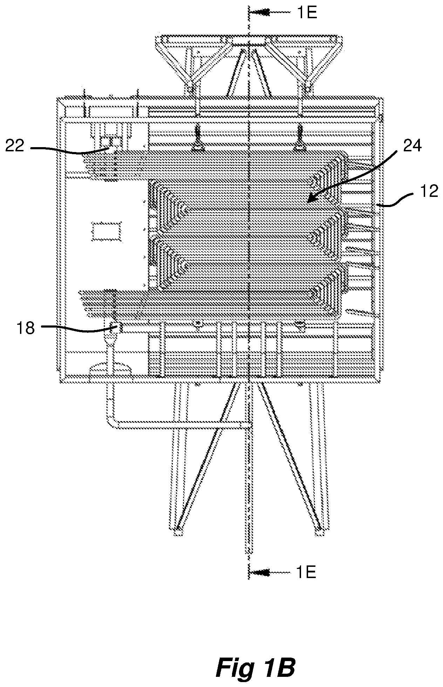

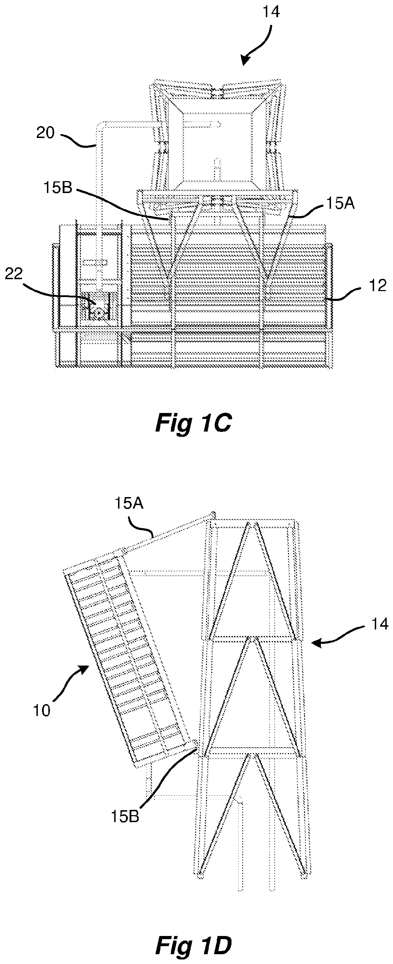

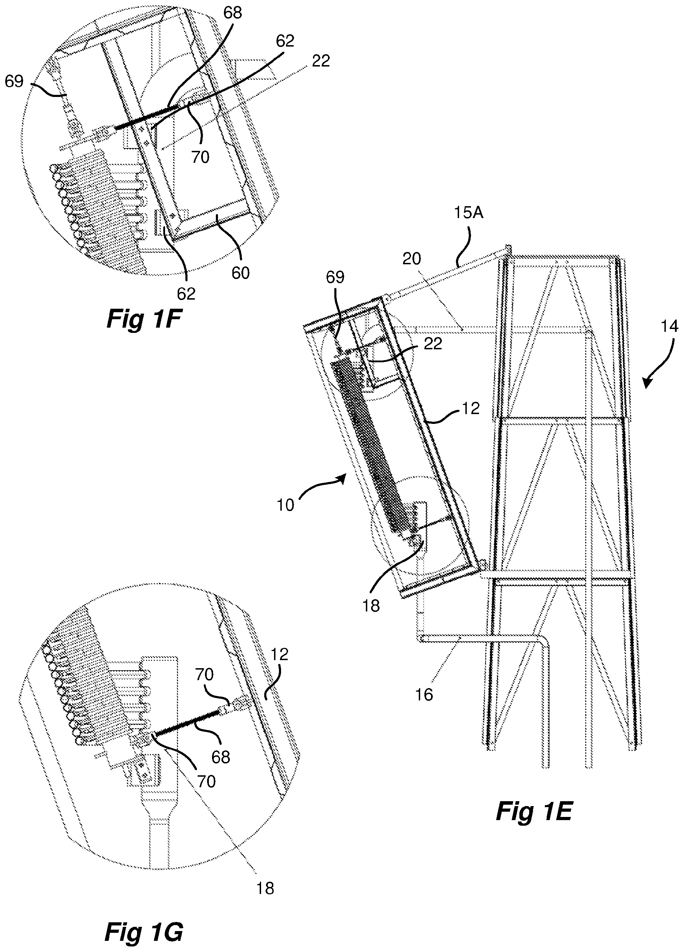

Referring first to Figure 1, a CSP system 100 includes an array of heliostats 102-1, 102-2, 102-N (collectively an array 102) for reflecting sunlight towards a solar thermal receiver module 104 on a tower 105. In its simplest form, each heliostat 102-x includes a support member 106 and a reflecting member 108 supported by the support member 106. The support member 106 is secured to the ground 150 and is thus intended to be stationary, whereas the reflecting member 108 is adjustably or controllably rotatable relative to the support member 106. The relative rotation is desired in two scenarios. The first scenario is to compensate for the sun's movement during day-time to facilitate continuous solar power being directed towards the solar power receiver module 104. The second is to calibrate the heliostat direction or heliostat orientation.

Referring now to Figures 1A-1D, a solar thermal receiver 10 is shown mounted within a rectangular box-like framework or enclosure 12 defining a receiver cavity, which is angled forwardly at an angle of about twenty degrees from the vertical so as to be at an optimum orientation for receiving concentrated solar energy from the heliostat array 102. The enclosure is in turn mounted on one upper side of the solar tower 14 via upper struts 15A and lower tabs 15B. It will be appreciated that the framework may extend to one or more other sides of the tower depending on the location of the heliostat array. An inlet conduit or pipe 16 leads from the base of the tower to a lower inlet header 18 of the solar thermal receiver 10. An upper outlet conduit or pipe 20 extends from an upper outlet header 22 and similarly leads to the base of the tower. An array of tubes 24 extend between an inlet manifold of the inlet header 18 and an outlet manifold of the outlet header 22 in a serpentine configuration. The array of tubes is similarly angled forward at about twenty degrees from the vertical, with the inlet and outlet headers 18 and 20 being vertically aligned.

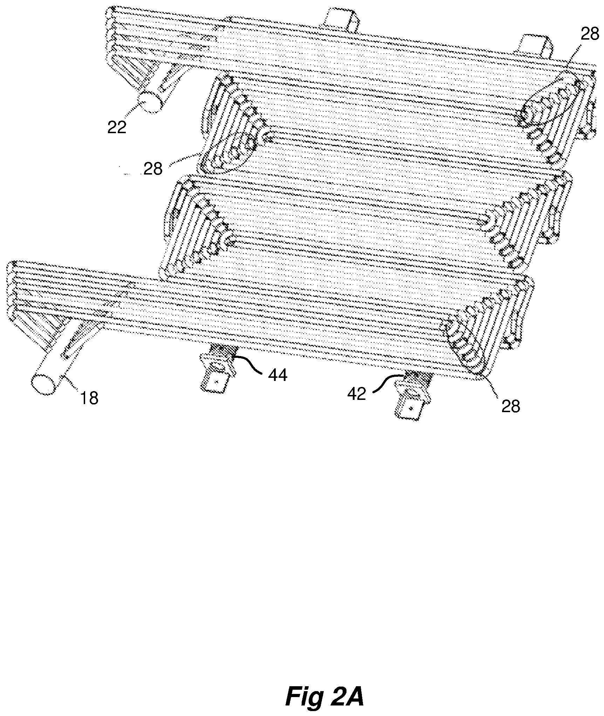

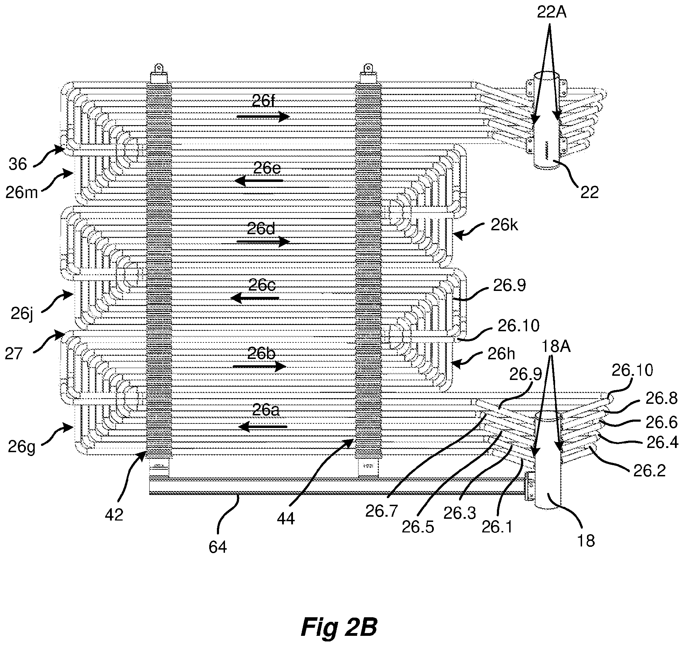

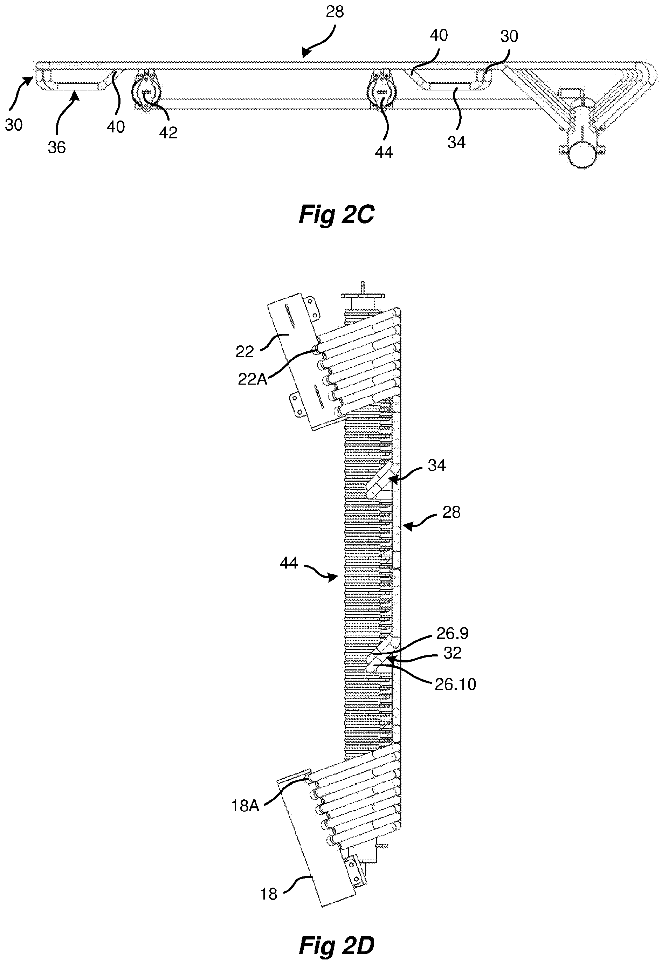

As is clearly depicted in Figures 2A to 2D, the serpentine array of tubes 24 comprises ten individual tubes 26.1, 26.2, 26.3, 26.4, 26.5, 26.6, 26.7, 26.8, 26.9 and 26.10 extending in parallel from inlet manifold 18A and the inlet header 18 to an outlet manifold 22A of the outlet header 22. Each of the tubes has a major horizontal component comprising six horizontal passes 26a, 26b, 26c, 26d, 26e and 26f joined by a minor upwardly angled component comprising five partly vertical passes 26g, 26h, 26j, 26k and 26m, with the tubes transitioning from horizontal to part vertical and back in tightly radiused bends 27. As is clear from Figures 2A-2D, the face of the receiver is uniplanar, with the tubes being arranged so that they are almost touching subject to play between the tubes to minimise radiant heat penetration into the cavity and backing behind the tubes as well as to maximise the radiant heat absorption onto the exposed solar heat receiving surface of the tubes. Typically the distance between adjacent tubes is around 1.5mm but it will be appreciated that this can vary, say from around 1mm to 3-4mm, with sufficient spacing to ensure that adjacent tubes do not touch or allow excessive heat to penetrate to the backing.

Most of the bends in the tubes are coplanar with the face of the receiver, as is shown at 28. However, where the required return bend radius is smaller than can be achieved, at location 30, for example, certain of the tubes (26.9 and 26.10) are bent out of plane as shown at 32, 34 and 36. The outer plane tubes are in turn bent back into uniplanar configuration with the remaining tubes of the receiver at locations 40 for example. The tubes are designed to ensure substantially equal resistance across each tube, so that the flow rate through each tube is similar. The dwell time of fluid through each tube is also similar due to most of the tubes being of substantially the same length. The tubes 26.9 and 26.10 are slightly longer due to the additional out of plane bends, but this is compensated for by virtue of the partly shielded out of plane portions not absorbing as much heat.

It can clearly be seen how at the inlet and outlet manifolds 18A and 22A alternate tubes extend from opposite sides of the inlet and outlet headers to allow sufficient space for the inlet and outlet manifold connections to be made, with the even numbered tubes having re-entrant portions allowing them to merge back into the uniplanar receiver.

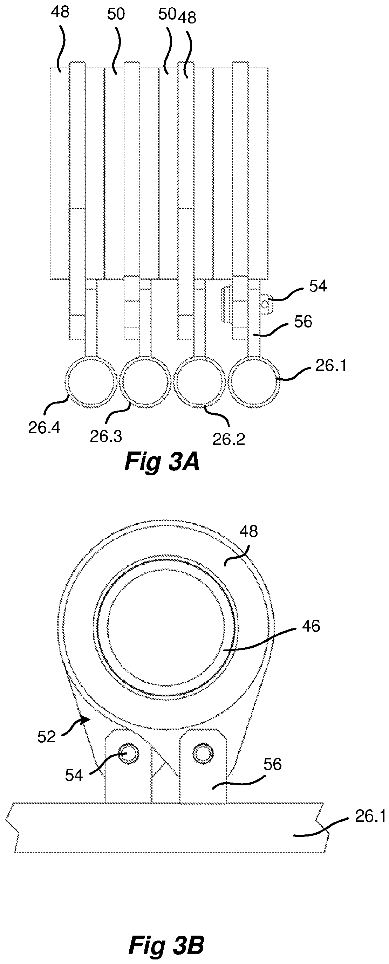

The tubes are mounted together on a parallel pair of tubular support beams 42 and 44, details of which are shown more clearly in Figures 3A and 3B. It will be appreciated that one support beam or three or more may be provided, depending on the extent of support required. Each of the supports includes a central pipe or conduit 46 which is surrounded by a series of ring-shaped support brackets 48 separated by ringspacers 50. The support brackets and spacers are able to slide up and down on the conduits. The support brackets are formed with apertured lobes 52 which are in turn mounted by pins 54 to tabs 56 which are welded to adjacent tubes 26.1, 26.2, 26.3 and 26.4. While only one pair are shown in Fig 3A it should be appreciated that all tube tabs are coupled to their respective lobes identically by their own dedicated pin. The support brackets are rotatably carried on the conduits 46 and the pins 54 similarly mount the lobes 52 rotatably to the tabs 56. This mounting arrangement allows for both horizontal and vertical or upwards and downwards movement of the tubes due to thermal expansion and contraction both parallel to and perpendicular to the horizontal axes, so that the tubes remain horizontal and aligned with the receiver face, as well as being able to expand or contract vertically. The spacers 50 between the ring brackets or links ensure that the tube vertical pitch is maintained with sufficient spacing to ensure that adjacent tubes do not touch.

The tube supports 42 and 44 are mounted to the enclosure 12 using an array of tie bars including inwardly extending tie bars 68 extending to the base of the enclosure 12 and upwardly extending tie bars 69 extending to the upper horizontal frame of the enclosure. The tie bars are fitted with universal couplings 70 to allow for some freedom of movement during expansion and contraction of the array of tubes.

Referring now to Figure 1E, 1F and 1G, the upper outlet header 22 is shown bolted rigidly to an L-shaped mounting bracket 60 extending from the enclosure 12 via mounting tabs 62. The lower inlet header 18 is in turn mounted to a cross beam 64 carried at the base of the array of tubes 24 via mounting tab 66 so that it is able to float relative to the enclosure 12. This allows the array of tubes to freely expand and contract with thermal variations relative to the enclosure without placing undue stresses on either the array of tubes or inlet and outlet manifolds. The tie bars 68 and 69 provide additional mounting security whilst allowing the required freedom of movement, with the entire tube assembly being suspended within the enclosure.

In the particular embodiment the tubes have an external diameter of 26.7mm and an internal diameter of 23.4mm, with a resultant wall thickness of 1.65mm. The overall height of the tube array is 1.73m and the width of the array from each header, is approximately 2.2m, with the width between outer vertical components being approximately 1.8m. It will be appreciated that all of these dimensions may vary widely, depending on the desired target size, the type of heat transfer fluid being carried, materials used, and other variables. Typical dimension ranges are as follows, but are not limited to these ranges:
Tube outer diameter range is typically 20mm-40mm, 25-30mm or 26-28mm.
Array height and width are typically from 1.5m x 1.5m in the case of a flat receiver up to 9m diameter and 20m high in the case of a cylindrical receiver, though this could be as little as 1m diameter and 1.5m high (5m²).
The overall receiver size is however determined by the total field heat input from the surrounding heliostat array, the need to manage the desired flux limit of -1500 kW/m² at any point in the receiver, and the need to minimise flux spillage. The range of height or width dimensions may vary from 1.3 to 20.0m². The receivers don't need to be square, but square dimensions would cover receivers of 2 - 400 m². A preferred size of square receiver is in the range of 10-15m², typically 13m² (3.7m wide by 3.7m high).
Without being bound by theory, in order to minimise thermal stress gradient it is desirable that the tubes be made as thin as possible whilst maintaining their structural integrity. Taking the material used and the tube diameter into consideration, tube thicknesses from 1.8mm to 1mm are contemplated. In particular, for a tube external diameter of 25-27mm, a thickness of 1.1-1.3mm, or 1.2mm is contemplated.

Suitable materials were selected for the receiver so as to allow for high and variable temperature operating conditions and subject to creep and fatigue. It was found that stainless steel alloys 230 and 625 were potentially viable alloys based on an evaluation of life used under 1000 hours of creep conditions, with mid-wall temperatures in the region of 650C, but that other stainless steel alloys could also be used, such as 316H, 347H as well as nickel based alloys, such as Inconel.

It will be appreciated that the number of passes as well as the number of tubes may be varied, and that the supports may be arranged so that the receiver face may be flat, curved or multi-faceted, depending on the application. For example, a single tube may be used with say 60 passes, 2 tubes with 30 passes, 3 tubes with 20, 4 with 15, 5 with 12, 6 with 10, 10 with 6, or 20 with 3. In each case optimum duration of heating to a desired temperature of say 600C needs to be balanced with optimum through flow.

It will be appreciated that the array of tubes extend from the operatively lower inlet header 18 to the operatively upper outlet header 22 so as to define a fluid flow path which is horizontal or upward (i.e. monotonic), and at no location downward, so as to facilitate the natural outflow or venting of gases through the outlet header and avoid or at least reduce the formation or accumulation of gas pockets, as well as to ensure relatively uniform flow resistance and constant fluid flow. At low flow rates with vertical up/down flow configuration, buoyancy effects can lead to local stagnation of flow in one or more tubes.

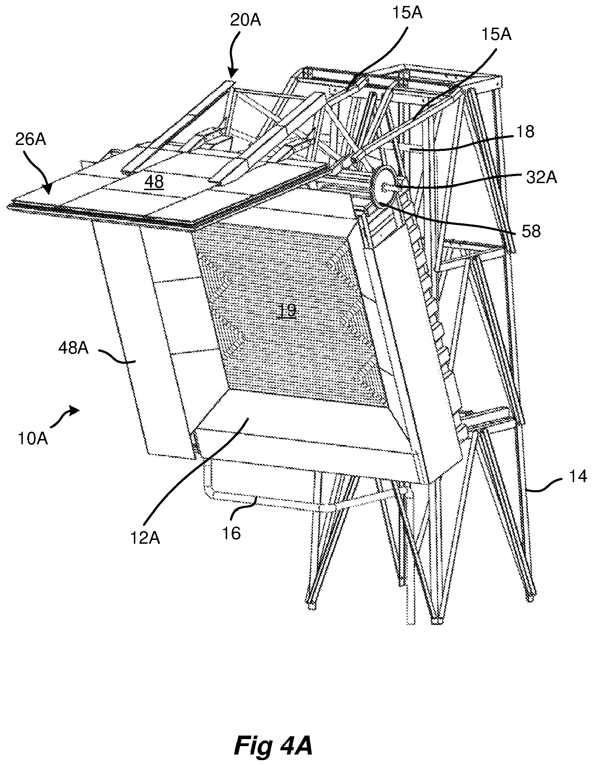

Referring now to Figures 4A-4B, a second embodiment of a solar thermal receiver 10A is shown mounted within a rectangular box-like framework or enclosure 12A defining a receiver cavity, which is angled forwardly at an angle of about twenty degrees from the vertical so as to be at an optimum orientation for receiving concentrated solar energy from the heliostat array 102. The heliostat array may include heliostats broadly of the type described in published International patent application WO2015143494 in the name of the applicant, but not limited thereto. The enclosure is in turn mounted on one upper side of a solar tower 14 via upper struts 15A and lower lugs (not shown). It will be appreciated that the framework may extend to one or more other sides of the tower depending on the location of the heliostat array. An inlet conduit or pipe 16 leads from the base of the tower to a lower inlet header (not shown) of the solar thermal receiver 10A. An upper outlet conduit or pipe 18 extends from an upper outlet header and similarly leads to the base of the tower. The inlet conduit or pipe 16 and outlet conduit or pipe 18 may be insulated and protected by being clad in sectional pipe insulation (e.g. spun mineral wool) and covered in a weatherproof outer surface layer (e.g. galvanised steel sheet).

An array of tubes 19 extend between an inlet manifold of the inlet header and an outlet manifold of the outlet header in a serpentine configuration. The array of tubes is similarly angled forward at about twenty degrees from the vertical. The array of tubes 19 is similar to the array of 24 of the first embodiment.

An insulating door assembly 20A comprises a frame 22A having a forward frame portion 24A carrying a door 26A and a rearward frame portion 28A carrying a counterweight 30A. The frame is mounted pivotally on a shaft 32A via a pair of upright supports 34A. The shaft 32A is in turn carried on a pair of trunnions 36A which are mounted to the top portion of the closure 12 of the receiver. Extending rearwards from the upright supports 34A are pairs of tubular extension arms 38A, 40A making up the rear frame 28A. The counterweight 30A is bolted between the rearmost ends of the extension arms 38A.

Extending forwardly from the upright supports 34A are an inner pair of extension arms 40A which are mounted to an upper end of the door and an outer pair of extension arms 42A which are mounted on connecting apertured lugs 44A located midway along the outer face of the door 26A. A cross bar 47A extends between the uprights 34A. The outer face of the door 26A as well as the extension arms 40A, 42A are fitted with refractory boards 48A formed from a high-strength reinforced silica matrix composite, or other suitable temperature-resistant rigid materials to provide shielding from concentrated solar radiation. The front portion of the framework 12A is similarly fitted with refractory boards or plates 48AA.

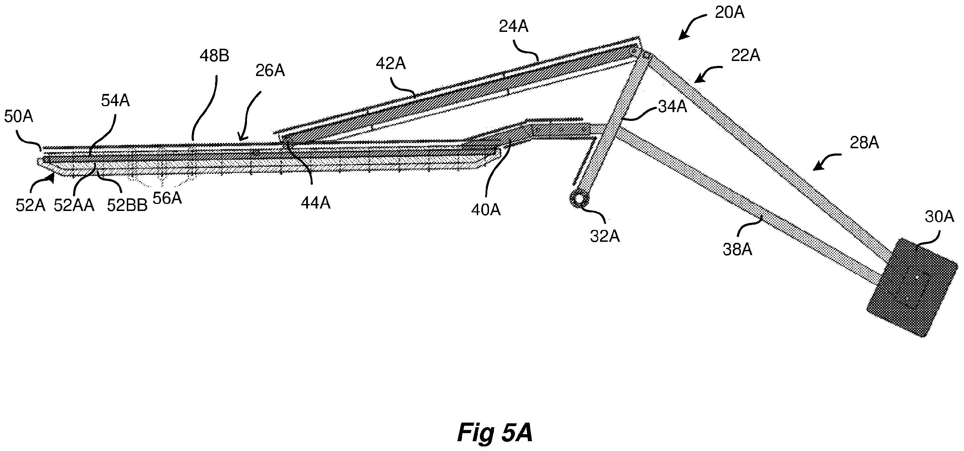

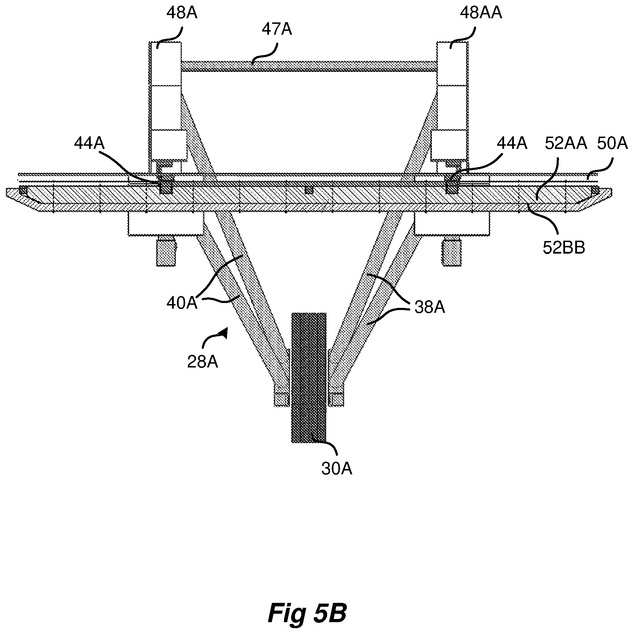

The composition of the insulating door assembly can more clearly be ascertained from Figures 5A and 5B. Beneath the refractory boards 48A is a weatherproof sheet 50A formed from galvanised steel. This covers ceramic fibre blankets 52A which include a thicker outer layer 52AA in the region of 50 mm thick and an inner layer 52BB located within a door frame 54A, in the region of half the thickness of the outer layer, the entire blanket assembly being held together with stainless steel mesh 56A which is tied to the door frame 54A. In one example, the ceramic fibre blankets 52A can be alumina-silicate fibre blankets, though it will be appreciated that they may be formed from any other suitable temperature and heat resistant insulating materials, as well as combinations of such materials.

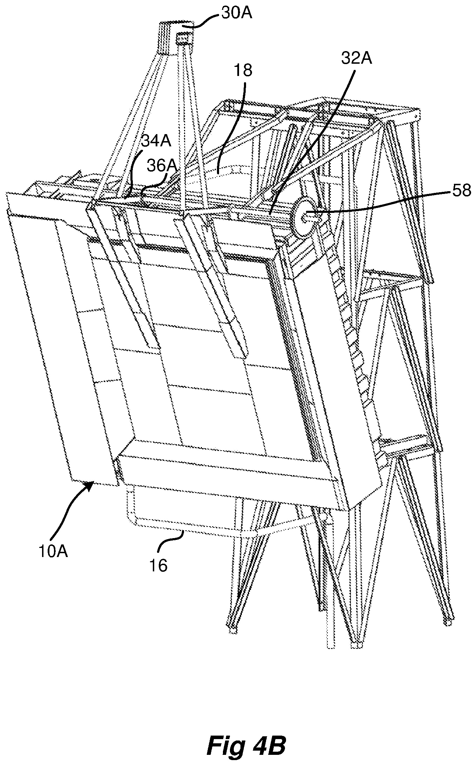

The door assembly 20A pivots between an open position indicated in Figure 4A and a closed position indicated in Figure 4B in which the outer edges of the door form a snug fit within the receiver cavity against the array of tubes 20A, thereby effectively shielding the tubes 19 from solar radiation. The door assembly is moved between the open and closed positions by an endless cable which extends over pulley 58 which is splined onto the shaft 32A. As an alternative to the cable and pulley arrangement various other types of actuators may be used including rack and pinion arrangements, and linear actuators or drives which act between the door and the tower and are electric, hydraulic or pneumatic.

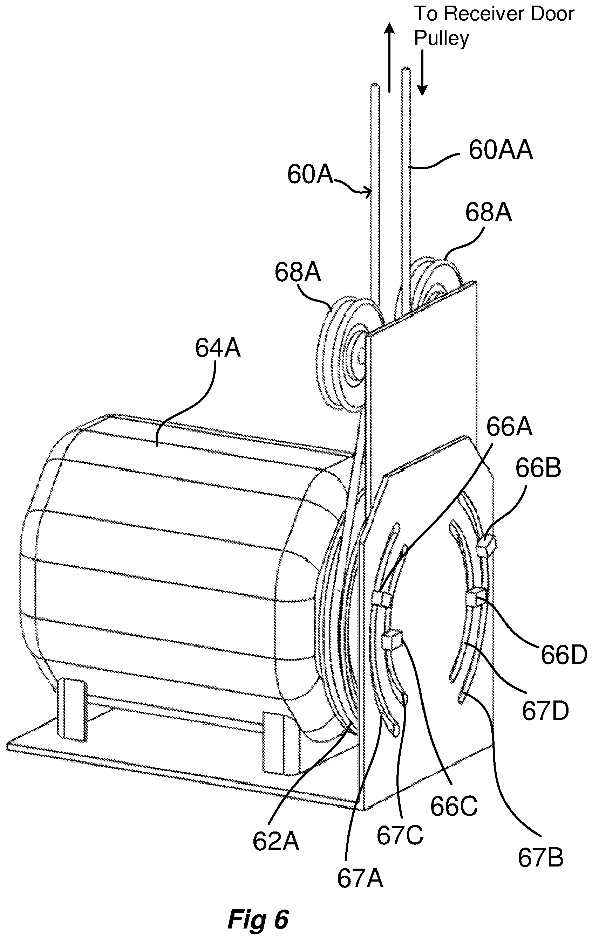

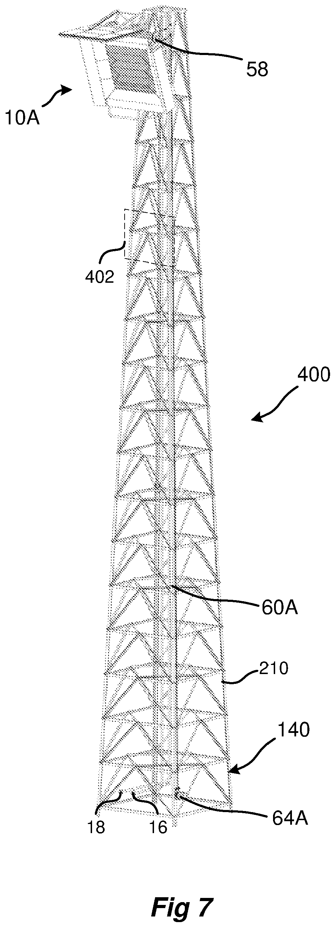

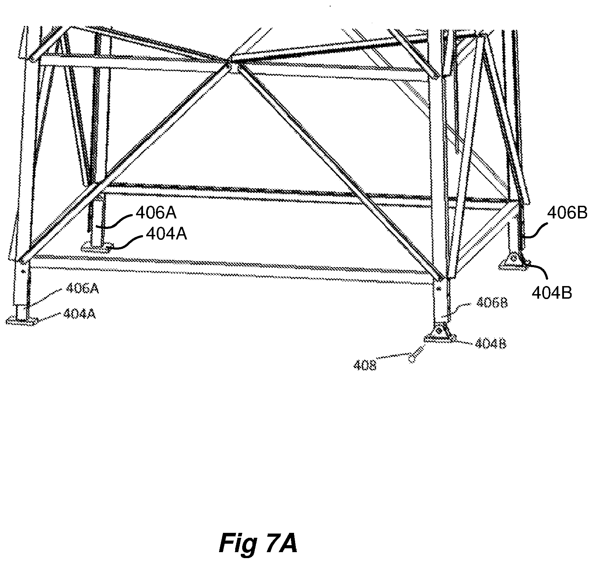

As shown in Figures 6 and 7, the endless cable 60A extends around a drive pulley 62A which is in turn driven by a rotatory actuator 64A which incorporates a gear box and a clutch mechanism (not shown). A first set of outer limit switches 66A and 66B adjustable along outer slots 67A and 67B are provided to limit travel of the door between the open and closed positions, which corresponds to a rotation of 110º. The outer limit switches 66A and 66B represent the open and closed positions of the door, respectively. A second set of inner limit switches 66C and 66D are also adjustable on respective inner slots 67C and 67D to adjust the speed of the rotary actuator 64A. To soften the impact of starting and stopping while the door assembly operates, for example, the actuator operates at a reduced speed until it crosses the first of the inner limit switches 66C, at which point the rotary actuator 64A increases its speed. When the second of the inner limit switches 66D is passed the rotary actuator 64A again reduces its speed and maintains this reduced speed until the second of outer limit switches 66B triggers the actuator to stop. The endless cable 60A is tensioned by a pair of auxiliary pulleys 68A. The length of the cable 60B which moves downwards on opening of the door may further be tensioned with one or more counterweights (not shown).

The actuator 64A can comprise any prime mover, including a compressed-air actuator, an electric or internal combustion motor or the like. The actuator is in turn configured to receive control signals from a remote controller. It will be appreciated that the door may be opened or closed in response to a number of such signals, including direct operator control or automatic opening and closing in response to one or more sensors, such as infrared sensors or cameras or flow sensors, detecting conditions requiring, for example, closure of the door. These could include overheating or cooling of the receiver, which would be measured by the temperature of sodium exiting the receiver, a blockage or restriction in the flow of sodium or other heat transfer fluid travelling through the tubular array, a power failure or extreme weather conditions.

Figure 7 shows a perspective view of a typical solar tower assembly 400 with a solar thermal receiver 10A mounted at the top of the tower in the manner previously described and the rotary actuator 64A attached to the base 140 of the tower, with the endless cable 60A tensioned between the drive pulley and the pulley 58. The tower assembly 400 may be fitted with one or more target regions in the form of a rectangular board 402 for enabling individual heliostats to be aimed and calibrated using a camera to analyse the image of the sun reflected by the heliostat on the target.

Referring now to Figure 7A, the base of the tower is formed with baseplates 404A and 404B which are bolted to a concrete plinth. The baseplates 404A are bolted to the corresponding feet 406A of the tower, and the baseplates 404B are mounted pivotably to the corresponding feet 406B via trunnion pins 408. To facilitate maintenance, the feet 406A are unbolted from the corresponding baseplates 404A and the tower is winched down to a horizontal position by pivoting on the trunnion pins 408. In this embodiment the inlet and outlet pipes 16 and 18, which are covered with insulation are moved to a position in which they extend adjacent a rear face of the tower about 1-1.5 metres from the corner post 210 of the tower, so that they can be easily accessed when in the lowered position. It will be appreciated that the pipes 16 and 18 can be disconnected at the base once the sodium has cooled down and solidified to enable the tower to be winched down. Heat tracer elements in the form of mineral insulated cables (not shown) extend along and in direct contact with the pipes 16 and 18 beneath the insulation to enable the solidified sodium to be reheated to melting point of above 98C after the tower has been raised and the pipes have been reconnected.

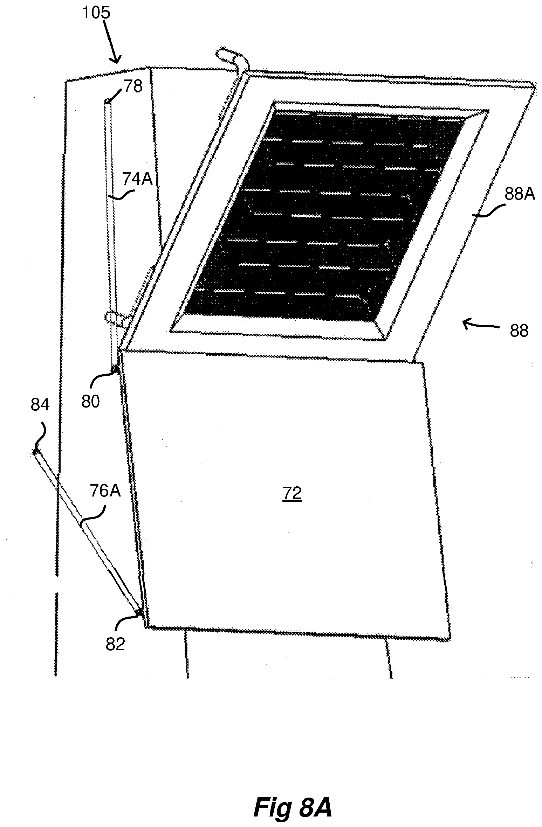

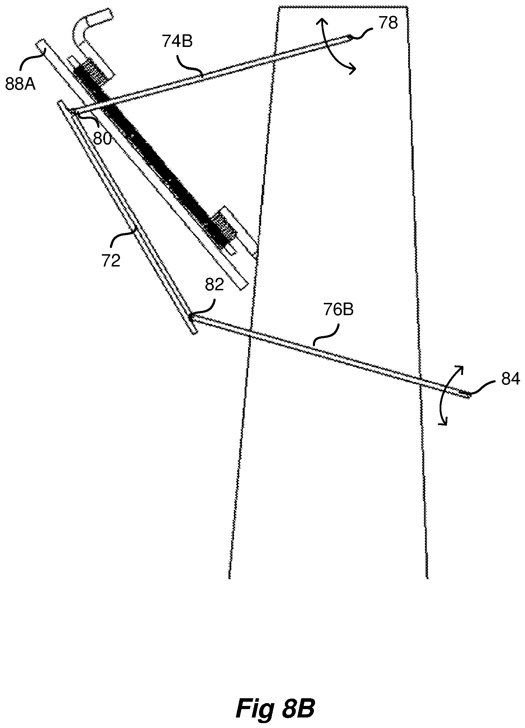

Figures 8A to 8C show an alternative embodiment of a door assembly 70 comprising a door 72 fitted with a four bar linkage including upper bars 74A and 74B and lower bars 76A and 76B. The upper bars 74A and 74B are mounted at their upper ends at pivot points 78 to an upper part of the tower 105 on opposite sides thereof. The lower ends of the upper bars are mounted at pivot points 80 to the upper sides of the door 72. The lower bars are similarly pointed at pivot points 82 to the lower sides of the door 72, with opposite ends of the bars mounted to the tower 105 or an extended part thereof (not shown) at pivot points 84.

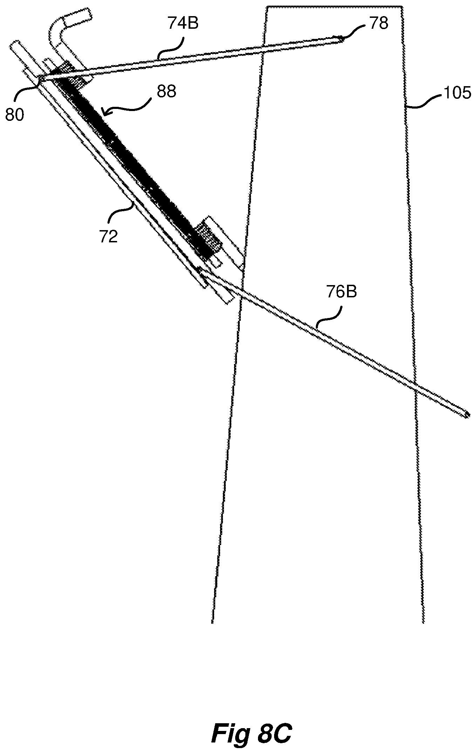

As is clear form Figures 8A to 8C the door is shown pivoting on the bars from the open position of Figure 8A to the closed position of Figure 8C in which the door 72 completely covers the receiver 88. The door may be moved between the open and closed positions using various means, including a pulley arrangement acting on the upper and/or lower bars, or a linear drive or actuator acting on the upper or lower bars, and operating electrically, hydraulically or pneumatically, A curved rack and pinion arrangement may also be utilised to pivot the upper or lower bars up and down. As an alternative to the four bar linkage the door 72 may also be configured to run on a pair of tracks which follow a similar path to the locus of the door on the four bar linkage.

An advantage of these arrangements over a door which pivots from the upper frame of the receiver is that in the open position the door protects that portion of the tower closest to the receiver from excess solar thermal radiation from the heliostat array, avoiding the need for additional refractory plating. In addition the additional load on the receiver mountings is avoided by the separate mounting arrangement of the door. In one embodiment, however, the upper and lower parts of the door surround may be formed with catches (not shown) with which the uppermost portion of the door 72 may engage via complemental catches (not shown) to increase the stability of the door in the open and closed positions. A further advantage is that it is the same side of the door which is exposed to the solar thermal radiation at all times, with the result that this exposed side of the door may be specifically configured to resist high thermal radiation.

In the case of the receiver, different configurations of tubes may be used, although not part of the present invention, including the predominantly transverse serpentine configuration as exemplified above, or other configurations in which the flow of fluid through the tubes is predominantly transverse and upward (i.e. monotonic) from a lower inlet to an upper outlet.

It was found that in general the life of the receiver could be extended by distributing the heat flux evenly and arranging the receiver tubes in a serpentine pattern, as opposed to a single pass multi-tube array in which the tubes were predominantly vertical or upright.

A wide variety of heat transfer fluids may also be utilised, including molten salts, liquid metals, such as sodium, and water/steam. In the particular embodiments sodium was the preferred heat transfer fluid due to its high thermal conductivity, allowing it to heat up relatively quickly, and its relatively high heat capacity at high temperatures. The broad temperature range at which it remains a liquid (98C to 883C), provides a sufficient ceiling above operating temperatures in the range of 500C to 600C in the event of overheating, as well as a lower temperature of solidification, in comparison with salt, which has traditionally been used.

It will be understood that the invention disclosed and defined in this specification extends to all alternative combinations of two or more of the individual features mentioned or evident from the text or drawings. All of these different combinations constitute various alternative aspects of the invention.

## Claims

1. A concentrated solar thermal receiver (10; 10A) for receiving concentrated solar thermal energy from a concentrating array of solar reflectors (102), the receiver comprising a single layered array of tubes (24; 19) configured to carry a heat transfer fluid and defining in combination an exposed concentrated solar thermal energy receiving surface, the array of tubes (24; 19) having a fluid inlet communicating with at least one inlet conduit (16) and a fluid outlet communicating with at least one outlet conduit (20), the fluid inlet comprising an operatively lower inlet header (18) and the fluid outlet comprising an operatively upper outlet header (22), and the array of tubes (24; 19) extending between the inlet header (18) and the outlet header (22);
**characterised in that**:
the array of tubes (24; 19) are arranged in a serpentine configuration, and the array has predominantly transverse passes or components (26a-f), with each tube in the array having an upright or longitudinal component (26g-m) between successive transverse passes or components (26a-f), such that, in operation, the transverse components or passes are substantially horizontal and the array of tubes (24; 19) thereby defines a fluid flow path which is horizontal and upward.

2. A concentrated solar thermal receiver (10; 10A) according to claim 1, in which the array includes a mounting arrangement for mounting the tubular array to a support or enclosure which is in turn mounted to a solar tower (14), the mounting arrangement being configured to allow transverse and upward/downward movement of the tubes in the array due to thermal contraction and expansion, the mounting arrangement including separation means (50) for preventing adjacent tubes from touching but maintaining them in an almost touching position.

3. A concentrated solar thermal receiver (10; 10A) according to claim 2, in which the mounting arrangement comprises at least one support beam (42, 44) which carries movable mounts (48) mounting the transverse tube components (26a-f) to the at least one support beam (42, 44) to permit transverse and upward/downward movement thereof.

4. A concentrated solar thermal receiver (10; 10A) according to claim 3, in which the at least one support beam (42, 44) includes at least two longitudinally or vertically aligned support beams (42, 44), and the movable mounts (48) comprise linkages (48), wherein the linkages (48) are rotatably and slidably mounted to the support beams (42, 44), the linkages (48) in turn being rotatably mounted to tabs (56) on the transverse tube components (26a-f) and separated by the separation means including slidable spacers (50).

5. A concentrated solar thermal receiver (10; 10A) according to any one of the preceding claims, in which the array of tubes (24; 19) comprises a plurality of multi-pass tubes (26.1-26.10) which extend alongside one another in a parallel and serpentine array from an inlet manifold (18A) of the inlet header (18) to an outlet manifold (22A) of the outlet header (22).

6. A concentrated solar thermal receiver (10; 10A) according to any one of claims 2 to 5, in which at least one of the inlet or outlet headers (18, 222) has a floating mount which allows it to move in concert with the thermal expansion and contraction of the array of tubes (24; 19), the lower inlet header (18) being provided with the floating mount and the upper outlet header (22) being provided with a fixed mount for mounting the upper header to the upper portion of a support frame or enclosure.

7. A concentrated solar thermal receiver (10; 10A) according to claim 5, in which the lengths of each of the tubes (26.1-26.10) in the array are substantially similar, and the flow resistance of each tube is substantially similar so as to provide a similar dwell time of heat conductive fluid.

8. A concentrated solar thermal receiver (10; 10A) according to any one of the preceding claims, in which the array of tubes (24; 19) is substantially co-planar so as to provide a continuous co-planar energy receiving surface, with certain of the tubes (26.9, 26.10) being bent out of plane when an in-plane bend radius is too small, such that adjacent co-planar tubes are almost touching, whilst allowing for play between tubes (26.1-26.10).

9. A concentrated solar thermal receiver (10A) according to any one of the preceding claims, wherein the receiver includes a thermally insulating cover (20A; 70) movable between an open position in which the solar thermal energy receiving surface is exposed to receive solar flux and a closed position in which the solar thermal energy receiving surface is covered to block or reduce the incidence of solar flux on the tubes (26.1-26.10) or to reduce heat loss from the array of tubes (19) under conditions where the incidence of solar flux is substantially reduced or non-existent.

10. A concentrated solar thermal receiver (10A) according to claim 9, which includes a support frame (12A) extending around the solar thermal energy receiving surface, and wherein the cover (20A; 70) is movable between the closed position in which it extends over the surface and at least part of the frame (12A), and an open position in which it allows the surface to be fully exposed to solar thermal radiation, the receiver including an actuator for moving the cover between the open and closed positions, and at least one sensor for activating the actuator in response to a sensed condition.

11. A concentrated solar thermal receiver (10A) according to claim 9 or claim 10, wherein:
the cover (20A) is pivotable about an axis parallel to an upper end of the receiver, and the cover (20A) includes a counterweight (30A) for facilitating opening and closing of the cover, or
the cover (70) includes one side suited to resisting high incident radiation and a mounting arrangement configured to maintain the one side facing the source of high incident radiation in both the open and closed positions and in moving therebetween, and wherein, when the cover is in the open position, it is located immediately below the receiver to provide protection from high incident radiation to that part of the receiver supporting structure immediately below the receiver and behind the cover.

12. A concentrated solar thermal receiver (10A) according to claim 11 when the cover (70) includes the one side adapted to resisting high incident radiation, wherein the mount includes one of a four bar linkage-type mount for movably mounting the cover (70) to the supporting structure or tower (14), or a set of tracks carried on the support structure or tower (14), the cover (7) being fitted with rollers or the like to travel along the set of tracks.

13. A concentrated solar thermal receiver (10A) according to any one of the preceding claims 9 to 12, in which the insulating cover (20A; 70) is configured to reduce convective and radiative heat loss from the array of tubes (24; 19), in a system where the heat transfer fluid is not drained from the tubes when there is no solar flux on the tubes.

14. A concentrated solar thermal receiver (10; 10A) according to any one of the preceding claims, in which:
the heat conductive fluid is sodium and the tubes are constructed from a stainless steel alloy such as 230 or 625 or a nickel based alloy such as Inconel; and/or
the array of tubes (24; 19) define at least one of a curved surface, a multi-faceted surface, a cylindrical or hemi-cylindrical surface, and an inverted frusto-cone or part thereof, at an optimum angle from the vertical for receiving the solar flux concentration.

15. A concentrated solar thermal tower assembly (400) including a solar thermal tower (14), and a concentrated solar thermal receiver (10; 10A) according to any one of the preceding claims mounted to an upper portion of the tower, wherein the tower (14) is pivotable between an upright position and a prone position for enabling maintenance thereof.

## Patentansprüche

1. Ein Empfänger (10; 10A) konzentrierter Solarthermie zum Empfangen konzentrierter Solarthermieenergie von einer konzentrierenden Anordnung von Sonnenreflektoren (102), wobei der Empfänger eine einschichtige Anordnung von Rohren (24; 19) beinhaltet, die konfiguriert sind, um eine Wärmeträgerflüssigkeit zu leiten, und die in Kombination eine exponierte Empfangsoberfläche konzentrierter Solarthermieenergie definieren, wobei die Anordnung von Rohren (24; 19) einen Flüssigkeitseingang, der mit mindestens einer Eingangsleitung (16) kommuniziert, und einen Flüssigkeitsausgang, der mit mindestens einer Ausgangsleitung (20) kommuniziert, umfasst, wobei der Flüssigkeitseingang einen betriebsmäßig unteren Eingangskopf (18) beinhaltet und der Flüssigkeitsausgang einen betriebsmäßig oberen Ausgangskopf (22) beinhaltet und sich die Anordnung von Rohren (24; 19) zwischen dem Eingangskopf (18) und dem Ausgangskopf (22) erstreckt;
**dadurch gekennzeichnet, dass**:
die Anordnung von Rohren (24; 19) in einer serpentinenförmigen Konfiguration arrangiert ist und die Anordnung vorwiegend querverlaufende Wege oder Komponenten (26a-f) aufweist, wobei jedes Rohr in der Anordnung eine aufrechte oder longitudinale Komponente (26g-m) zwischen sukzessiven querverlaufenden Wegen oder Komponenten (26a-f) aufweist, sodass, im Betrieb, die querverlaufenden Komponenten oder Wege im Wesentlichen horizontal sind und die Anordnung von Rohren (24; 19) dadurch einen Flüssigkeitsströmungspfad definiert, der horizontal und aufwärts gerichtet ist.

2. Empfänger (10; 10A) konzentrierter Solarthermie gemäß Anspruch 1, bei dem die Anordnung ein Befestigungsarrangement zum Befestigen der rohrförmigen Anordnung an einer Stütze oder einer Einfassung, die wiederum an einem Sonnenturm (14) befestigt ist, umfasst, wobei das Befestigungsarrangement konfiguriert ist, um querverlaufende und Aufwärts-/Abwärtsbewegungen der Rohre in der Anordnung aufgrund von thermischer Kontraktion und Expansion zu ermöglichen, wobei das Befestigungsarrangement Trennungsmittel (50) umfasst, um zu verhindern, dass sich angrenzende Rohre berühren, aber sie in einer sich fast berührenden Position zu halten.

3. Empfänger (10; 10A) konzentrierter Solarthermie gemäß Anspruch 2, bei dem das Befestigungsarrangement mindestens einen Stützbalken (42, 44) beinhaltet, der bewegbare Befestigungen (48) trägt, die die querverlaufenden Rohrkomponenten (26a-f) an dem mindestens einen Stützbalken (42, 44) befestigen, um querverlaufende und Aufwärts-/Abwärtsbewegungen davon zu ermöglichen.

4. Empfänger (10; 10A) konzentrierter Solarthermie gemäß Anspruch 3, bei dem der mindestens eine Stützbalken (42, 44) mindestens zwei longitudinal oder vertikal ausgerichtete Stützbalken (42, 44) umfasst und die bewegbaren Befestigungen (48) Verknüpfungen (48) beinhalten, wobei die Verknüpfungen (48) drehbar und gleitbar an den Stützbalken (42, 44) befestigt sind, wobei die Verknüpfungen (48) wiederum drehbar an Laschen (56) an den querverlaufenden Rohrkomponenten (26a-f) befestigt sind und durch die Trennungsmittel, die gleitbare Abstandshalter (50) umfassen, getrennt sind.

5. Empfänger (10; 10A) konzentrierter Solarthermie gemäß einem der vorhergehenden Ansprüche, bei dem die Anordnung von Rohren (24; 19) eine Vielzahl von mehrwegigen Rohren (26.1-26.10) beinhaltet, die sich aneinander entlang in einer parallelen und serpentinenförmigen Anordnung von einem Eingangssammler (18A) des Eingangskopfs (18) zu einem Ausgangssammler (22A) des Ausgangskopfs (22) erstrecken.

6. Empfänger (10; 10A) konzentrierter Solarthermie gemäß einem der Ansprüche 2 bis 5, bei dem mindestens einer des Eingangs- oder Ausgangskopfs (18, 222) eine schwimmende Befestigung aufweist, die es ihm ermöglicht, sich in Übereinstimmung mit der thermischen Expansion und Kontraktion der Anordnung von Rohren (24; 19) zu bewegen, wobei der untere Eingangskopf (18) mit der schwimmenden Befestigung bereitgestellt ist und der obere Ausgangskopf (22) mit einer fixierten Befestigung zum Befestigen des oberen Kopfs an dem oberen Abschnitt eines Stützrahmens oder einer Einfassung bereitgestellt ist.

7. Empfänger (10; 10A) konzentrierter Solarthermie gemäß Anspruch 5, bei dem die Längen jedes der Rohre (26.1-26.10) in der Anordnung im Wesentlichen ähnlich sind und der Strömungswiderstand jedes Rohrs im Wesentlichen ähnlich ist, um eine ähnliche Verweilzeit einer wärmeleitenden Flüssigkeit bereitzustellen.

8. Empfänger (10; 10A) konzentrierter Solarthermie gemäß einem der vorhergehenden Ansprüche, bei dem die Anordnung von Rohren (24; 19) im Wesentlichen komplanar ist, um eine kontinuierliche komplanare energieempfangende Oberfläche bereitzustellen, wobei gewisse der Rohre (26.9, 26.10) außerhalb einer Ebene gebogen sind, wenn ein Biegeradius in der Ebene zu klein ist, sodass sich angrenzende komplanare Rohre beinahe berühren, dabei aber ein Spiel zwischen den Rohren (26.1-26.10) ermöglicht wird.

9. Empfänger (10A) konzentrierter Solarthermie gemäß einem der vorhergehenden Ansprüche, wobei der Empfänger eine thermisch isolierende Abdeckung (20A, 70) umfasst, die zwischen einer offenen Position, in der die Empfangsoberfläche für Solarthermieenergie exponiert ist, um solaren Fluss zu empfangen, und einer geschlossenen Position, in der die Empfangsoberfläche für Solarthermieenergie abgedeckt ist, um den Einfall von solarem Fluss auf die Rohre (26.1-26.10) zu blockieren oder zu reduzieren oder den Wärmeverlust von der Anordnung von Rohren (19) unter Bedingungen zu reduzieren, unter denen der Einfall von solarem Fluss im Wesentlichen reduziert oder nicht existent ist, bewegbar ist.

10. Empfänger (10A) konzentrierter Solarthermie gemäß Anspruch 9, der einen Stützrahmen (12A) umfasst, der sich um die Empfangsoberfläche für Solarthermieenergie erstreckt, und wobei die Abdeckung (20A; 70) zwischen der geschlossenen Position, in der sie sich über die Oberfläche und mindestens einen Teil des Rahmens (12A) erstreckt, und einer offenen Position, in der sie der Oberfläche ermöglicht, gegenüber Solarthermiestrahlung vollständig exponiert zu sein, bewegbar ist, wobei der Empfänger einen Aktor zum Bewegen der Abdeckung zwischen der offenen und der geschlossenen Position und mindestens einen Sensor zum Aktivieren des Aktors als Reaktion auf eine wahrgenommene Bedingung umfasst.

11. Empfänger (10A) konzentrierter Solarthermie gemäß Anspruch 9 oder Anspruch 10, wobei:
die Abdeckung (20A) um eine Achse parallel zu einem oberen Ende des Empfängers schwenkbar ist und die Abdeckung (20A) ein Gegengewicht (30A) umfasst, um das Öffnen oder Schließen der Abdeckung zu erleichtern, oder
die Abdeckung (70) eine Seite, die geeignet ist, um hoher Einfallsstrahlung zu widerstehen, und ein Befestigungsarrangement, das konfiguriert ist, um die eine Seite, die der Quelle hoher Einfallsstrahlung gegenüberliegt, in sowohl der offenen als auch der geschlossenen Position und dazwischen bewegend zu halten, umfasst, und wobei,
wenn sich die Abdeckung in der offenen Position befindet, sie sich unmittelbar unterhalb des Empfängers befindet, um dem Teil der empfängerstützenden Struktur unmittelbar unterhalb des Empfängers und hinter der Abdeckung Schutz vor hoher Einfallsstrahlung bereitzustellen.

12. Empfänger (10A) konzentrierter Solarthermie gemäß Anspruch 11, wenn die Abdeckung (70) die eine Seite umfasst, die angepasst ist, um hoher Einfallstrahlung zu widerstehen, wobei die Befestigung eines von einer Befestigung vom Typ Gelenkviereck zum bewegbaren Befestigen der Abdeckung (70) an der Stützstruktur oder dem Turm (14), oder einem Satz von Schienen, die auf der Stützstruktur oder dem Turm (14) getragen werden, umfasst, wobei die Abdeckung (7) mit Rollen oder dergleichen ausgerüstet ist, um sich entlang des Satzes von Schienen fortzubewegen.

13. Empfänger (10A) konzentrierter Solarthermie gemäß einem der vorhergehenden Ansprüche 9 bis 12, bei dem die isolierende Abdeckung (20A; 70) konfiguriert ist, um Wärmeverlust durch Konvektion und Strahlung von der Anordnung von Rohren (24; 19) zu reduzieren, in einem System, in dem die Wärmeträgerflüssigkeit nicht aus den Rohren abgelassen wird, wenn es auf den Rohren keinen solaren Fluss gibt.

14. Empfänger (10; 10A) konzentrierter Solarthermie gemäß einem der vorhergehenden Ansprüche, bei dem:
die wärmeleitende Flüssigkeit Natrium ist und die Rohre aus einer Edelstahllegierung wie etwa 230 oder 625 oder einer auf Nickel basierenden Legierung wie etwa Inconel bestehen; und/oder
die Anordnung von Rohren (24; 19) mindestens eines von einer gebogenen Oberfläche, einer Oberfläche mit mehreren Facetten, einer zylindrischen oder halbzylindrischen Oberfläche und einem umgekehrten Kegelstumpf oder einem Teil davon in einem optimalen Winkel von der Vertikalen zum Aufnehmen der Solarflusskonzentration definiert

15. Eine Turmanordnung (400) für konzentrierte Solarthermie, die einen Solarthermieturm (14) und einen Empfänger (10; 10A) konzentrierter Solarthermie gemäß einem der vorhergehenden Ansprüche, der an einem oberen Abschnitt des Turms befestigt ist, umfasst, wobei der Turm (14) zwischen einer aufrechten Position und einer geneigten Position zum Ermöglichen der Wartung davon schwenkbar ist.

## Revendications

1. Un récepteur thermique solaire à concentration (10, 10A) destiné à recevoir de l'énergie thermique solaire concentrée provenant d'un réseau de réflecteurs solaires (102) concentrateur, le récepteur comprenant un réseau de tubes (24 ; 19) monocouche configuré pour transporter un fluide de transfert de chaleur et définissant en combinaison une surface de réception d'énergie thermique solaire concentrée exposée, le réseau de tubes (24 ; 19) ayant une entrée de fluide communiquant avec au moins un conduit d'entrée (16) et une sortie de fluide communiquant avec au moins un conduit de sortie (20), l'entrée de fluide comprenant un collecteur d'entrée (18) fonctionnellement inférieur et la sortie de fluide comprenant un collecteur de sortie (22) fonctionnellement supérieur, et le réseau de tubes (24 ; 19) s'étendant entre le collecteur d'entrée (18) et le collecteur de sortie (22) ;
**caractérisé en ce que** :
le réseau de tubes (24 ; 19) sont agencés dans une configuration en serpentin, et le réseau a des passes ou composantes majoritairement transversales (26a-f), chaque tube dans le réseau ayant une composante dressée ou longitudinale (26g-m) entre des passes ou composantes transversales (26a-f) successives, de telle sorte que, en fonctionnement, les composantes ou passes transversales soient substantiellement horizontales et le réseau de tubes (24 ; 19) définisse de ce fait un circuit de fluide qui est horizontal et ascendant.

2. Un récepteur thermique solaire à concentration (10 ; 10A) selon la revendication 1, dans lequel le réseau inclut un agencement de montage destiné à monter le réseau tubulaire sur un support ou une enceinte qui est à son tour monté(e) sur une tour solaire (14), l'agencement de montage étant configuré pour permettre un mouvement transversal et ascendant/descendant des tubes dans la matrice en raison d'une contraction et d'une dilatation thermiques, l'agencement de montage incluant des moyens de séparation (50) destinés à empêcher des tubes adjacents de se toucher mais à les maintenir dans une position se touchant presque.

3. Un récepteur thermique solaire à concentration (10 ; 10A) selon la revendication 2, dans lequel l'agencement de montage comprend au moins une poutre de support (42, 44) qui porte des montures mobiles (48) montant les composantes de tube transversales (26a-f) sur l'au moins une poutre de support (42, 44) pour tolérer leur mouvement transversal et ascendant/descendant.

4. Un récepteur thermique solaire à concentration (10 ; 10A) selon la revendication 3, dans lequel l'au moins une poutre de support (42, 44) inclut au moins deux poutres de support (42, 44) alignées longitudinalement ou verticalement, et les montures mobiles (48) comprennent des liaisons (48), les liaisons (48) étant montées de manière rotative et coulissante sur les poutres de support (42, 44), les liaisons (48) étant à leur tour montées de manière rotative sur des pattes (56) sur les composantes de tube transversales (26a-f) et séparées par les moyens de séparation incluant des entretoises (50) coulissantes.

5. Un récepteur thermique solaire à concentration (10 ; 10A) selon l'une quelconque des revendications précédentes, dans lequel le réseau de tubes (24 ; 19) comprend une pluralité de tubes à passes multiples (26.1-26.10) qui s'étendent les uns le long des autres dans un réseau parallèle et en serpentin depuis une tubulure d'entrée (18A) du collecteur d'entrée (18) jusqu'à une tubulure de sortie (22A) du collecteur de sortie (22).

6. Un récepteur thermique solaire à concentration (10 ; 10A) selon l'une quelconque des revendications 2 à 5, dans lequel au moins un des collecteurs d'entrée et de sortie (18, 222) a une monture flottante qui lui permet de se mouvoir de concert avec la dilatation et la contraction thermiques du réseau de tubes (24 ; 19), le collecteur d'entrée (18) inférieur étant pourvu de la monture flottante et le collecteur de sortie (22) supérieur étant pourvu d'une monture fixe destinée à monter le collecteur supérieur sur la partie supérieure d'un châssis ou d'une enceinte de support.

7. Un récepteur thermique solaire à concentration (10 ; 10A) selon la revendication 5, dans lequel les longueurs de chacun des tubes (26.1-26.10) dans le réseau sont substantiellement similaires, et la résistance à l'écoulement de chaque tube est substantiellement similaire de façon à offrir un temps de séjour similaire d'un fluide conducteur de chaleur.

8. Un récepteur thermique solaire à concentration (10 ; 10A) selon l'une quelconque des revendications précédentes, dans lequel le réseau de tubes (24 ; 19) est substantiellement coplanaire de façon à offrir une surface de réception d'énergie coplanaire continue, certains des tubes (26.9, 26.10) étant courbés hors du plan lorsqu'un rayon de courbure dans le plan est trop petit, de telle sorte que des tubes coplanaires adjacents se touchent presque, tout en laissant du jeu entre tubes (26.1-26.10).

9. Un récepteur thermique solaire à concentration (10A) selon l'une quelconque des revendications précédentes, le récepteur incluant un couvercle (20A ; 70) thermiquement isolant mobile entre une position ouverte dans laquelle la surface de réception d'énergie thermique solaire est exposée pour recevoir un flux solaire et une position fermée dans laquelle la surface de réception d'énergie thermique solaire est couverte pour bloquer ou réduire l'incidence du flux solaire sur les tubes (26.1-26.10) ou pour réduire la perte de chaleur par le réseau de tubes (19) dans des conditions où l'incidence du flux solaire est substantiellement réduite ou inexistante.

10. Un récepteur thermique solaire à concentration (10A) selon la revendication 9, qui inclut un châssis de support (12A) s'étendant autour de la surface de réception d'énergie thermique solaire, et dans lequel le couvercle (20A ; 70) est mobile entre la position fermée dans laquelle il s'étend au-dessus de la surface et d'au moins une partie du châssis (12A), et une position ouverte dans laquelle il permet à la surface d'être entièrement exposée au rayonnement thermique solaire, le récepteur incluant un actionneur destiné à mouvoir le couvercle entre les positions ouverte et fermée, et au moins un capteur destiné à activer l'actionneur en réponse à une condition détectée.

11. Un récepteur thermique solaire à concentration (10A) selon la revendication 9 ou la revendication 10, dans lequel :
le couvercle (20A) est pivotant autour d'un axe parallèle à une extrémité supérieure du récepteur, et le couvercle (20A) inclut un contrepoids (30A) destiné à faciliter l'ouverture et la fermeture du couvercle, ou
le couvercle (70) inclut un côté approprié pour résister à un fort rayonnement incident et un agencement de montage configuré pour maintenir ledit côté face à la source de fort rayonnement incident dans les deux positions ouverte et fermée et pendant un mouvement entre elles, et dans lequel, lorsque le couvercle est dans la position ouverte, il est situé immédiatement au-dessous du récepteur pour offrir une protection contre le fort rayonnement incident à la partie de la structure de support du récepteur se trouvant immédiatement au-dessous du récepteur et derrière le couvercle.

12. Un récepteur thermique solaire à concentration (10A) selon la revendication 11 lorsque le couvercle (70) inclut ledit côté apte à résister à un fort rayonnement incident, dans lequel la monture inclut soit une monture du type liaison à quatre barres destinée à monter de manière mobile le couvercle (70) sur la structure de support ou tour (14), soit un ensemble de pistes portées sur la structure de support ou tour (14), le couvercle (7) étant équipé de rouleaux ou analogues pour se déplacer le long de l'ensemble de pistes.

13. Un récepteur thermique solaire à concentration (10A) selon l'une quelconque des revendications précédentes 9 à 12, dans lequel le couvercle isolant (20A ; 70) est configuré pour réduire la perte de chaleur convective ou radiative par le réseau de tubes (24 ; 19), dans un système où le fluide de transfert de chaleur n'est pas vidangé des tubes lorsqu'il n'y a pas de flux solaire sur les tubes.

14. Un récepteur thermique solaire à concentration (10 ; 10A) selon l'une quelconque des revendications précédentes, dans lequel :
le fluide conducteur de chaleur est du sodium et les tubes sont construits en un alliage d'acier inoxydable tel que 230 ou 625 ou en un alliage à base de nickel tel que l'Inconel ; et/ou
le réseau de tubes (24 ; 19) définissent au moins un élément parmi une surface courbe, une surface multi-facettes, une surface cylindrique ou hémicylindrique, et un tronc de cône renversé ou une partie de celui-ci, et un angle optimal par rapport à la verticale pour la réception de la concentration de flux solaire.

15. Un ensemble tour thermique solaire à concentration (400) incluant une tour thermique solaire (14), et un récepteur thermique solaire à concentration (10 ; 10A) selon l'une quelconque des revendications précédentes monté sur une portion supérieure de la tour, dans lequel la tour (14) est pivotante entre une position dressée et une position inclinée destinée à rendre possible sa maintenance.
